# EUROPEAN PATENT SPECIFICATION

(11) **EP 2 227 754 B1**
(45) Date of publication and mention of the grant of the patent: **28.11.2012**
(21) Application number: 09700285.1
(22) Date of filing: 07.01.2009
(51) Int. Cl.: G05D 1/00

(54) **TOOL SIMULATION SYSTEM FOR REMOTELY LOCATED MACHINE**
WERKZEUGSIMULATIONSSYSTEM FÜR AN ENTFERNTEN STANDORTEN BEFINDLICHE MASCHINEN
SYSTÈME DE SIMULATION D'OUTIL POUR MACHINE SITUÉE À DISTANCE

(30) Priority: 07.01.2008 US 7095
(43) Date of publication of application: 15.09.2010
(73) Proprietor: Caterpillar, Inc., Peoria, IL 61629-9510 (US)
(72) Inventor: YUET, Fu, Pei, Peoria, Illinois 61629-9510 (US); CLAR, Jean-Jacques, Peoria, Illinois 61629-9510 (US); STRATTON, Kenneth Lee, Peoria, Illinois 61629-9510 (US); SHULTS, Jamie, Peoria, Illinois 61629-9510 (US); OPDENBOSCH, Augusto, Peoria, Illinois 61629-9510 (US); SANTAMARIA, Juan Carlos, Peoria, Illinois 61629-9510 (US)
(74) Representative: Preuss, Udo
(86) International application number: PCT/US2009/000079
(87) International publication number: WO 2009/089012

(56) References cited:
- US-A- 5 377 116
- US-A- 5 659 470
- US-A- 5 950 141
- US-A1- 2004 158 355
- US-A1- 2006 090 378
- US-B2- 6 505 108

## Description

### Technical Field

This disclosure relates generally to a simulation system and, more particularly, to a tool simulation system that displays an image associated with a remotely located machine.

### Background

Machines such as, for example, excavators, loaders, dozers, motor graders, haul trucks, and other types of heavy equipment are used to perform a variety of tasks. During the performance of these tasks, the machines operate under extreme environmental conditions uncomfortable for the operator, or at work locations remote from civilization. Because of these factors, the completion of some tasks by an onboard operator can be expensive, labor intensive, time consuming, and inefficient.

One solution to this problem includes remotely controlling the machine. Specifically, an offboard operator located remotely from the machine, if provided with a visual representation of the machine and the work environment, could control operation of the machine from a more suitable location. The visual representation of the machine and work environment is provided by way of a live video feed broadcast from the worksite to the operator. The operator then provides, via a graphical user interface, operational instructions that are subsequently sent to the machine for control thereof.

One problem with remotely controlling the machine through live video feed, though, exists in connection with the large bandwidth required for transmitting the feed from a machine to a remote location. During remote control operations, where large bandwidth for transmitting a live video feed may not be available, an operator must move back and forth between a remote control station and the bulldozer, iteratively checking blade load visually and then making remote control adjustments to the blade. This iterative procedure can be inefficient and time-consuming.

US 2006/0090378 A1 discloses a method for controlling a machine. The method can comprise a plurality of activities that can comprise determining a profile of a surface responsive to a scan of the surface. The method can comprise identifying a predetermined profile from a plurality of predetermined profiles, the identified predetermined profile can be a closest match of the plurality of predetermined profiles to the profile of the surface. The method can comprise determining a machine procedure based upon the identified predetermined profile. The method can comprise automatically executing the preferred machine procedure via a machine.

US 2004/0158355 A1 discloses intelligent systems and functions for autonomous load handling vehicles such as wheel-loaders operating within limited areas and industrial environments. The vehicle is provided with a laser-optic system for determining the vehicle's position in six degrees of freedom comprising x, y, z, heading, pitch and roll, in fixed to ground coordinates. This system is used for autonomous vehicle navigation and as reference for on board terrain mapping sensors and a dynamic terrain model. The dynamic terrain model is employed for planning and analyzing paths, for detecting and avoiding obstacles, and for providing data for optimizing vehicle paths and the movements of its implements in loading and unloading operations.

US 5 659 470 A discloses a computerized monitoring system for sensing, displaying and storing a plurality of vehicle parameters for determining efficiency and to provide a detailed history of the vehicle throughout a work shift.

An attempt at addressing these problems is described in U.S. Patent No. 5,950,141 (the '141 patent) issued to Yamamoto et al. on 7 September 1999. The system described by the '141 patent includes a means for detecting reactions exerted on a blade, a means for calculating a load factor of the blade on which earth is accumulated, and a means for displaying a value or simplified graphic representation of the load factor. The system of the '141 patent provides for moving a dozer to a location and then having the dozer automatically switch from digging to currying according to the automatic detection of the volume of earth accumulated on the face of the blade. Guiding of the bulldozer to the location is carried out by the operator through manual operation or from a remote place with the aid of a radio controller. Therefore, the ' 141 patent describes a system for automatically performing a dozing operation without depending on the operator's perception and influence over the operation.

Although the system of the '141 patent may provide an automatic system for remotely controlling a bulldozer where large bandwidth is unavailable, the system precludes skilled operators from using their skills and experience to influence dozing operations. In the ' 141 system, the operator merely directs the machine to a dozing location, as opposed to controlling the dozing and material-moving operations at that location. By not incorporating the skill of operators, the versatility of the ' 141 system for reacting to unforeseen circumstances may be reduced. Additionally, the speed and skill in dozing tasks that experienced dozer operators may bring to the worksite are not utilized.

The present disclosure is directed to overcoming one or more of the problems set forth above.

### Summary of the Disclosure

In accordance with one aspect, the present disclosure is directed toward a tool simulation system for a machine. The system includes a user interface located remotely from the machine and a processor in communication with the user interface and the machine. The processor is configured to receive a plurality of parameters sensed at the machine's location, calculate tool loading based on the plurality of parameters, and display a computer model of the tool and of the material exerting forces against the tool on the user interface.

According to another aspect, the present disclosure is directed toward a method of displaying tool loading. The method includes receiving input parameters measured at a machine location, calculating tool loading of the machine based on the received input parameters, and displaying a computer model of the tool and of the material exerting forces against the tool to a user remote from the machine location.

### Brief Description of the Drawings

Fig. 1 is a pictorial illustration of an exemplary disclosed machine travelling about a worksite;
Fig. 2 is a schematic and diagrammatic illustration of an exemplary disclosed simulation and control system for use with the machine of Fig. 1; and
Fig. 3 is a pictorial illustration of an exemplary disclosed graphical user interface for use with the system of Fig. 2.

### Detailed Description

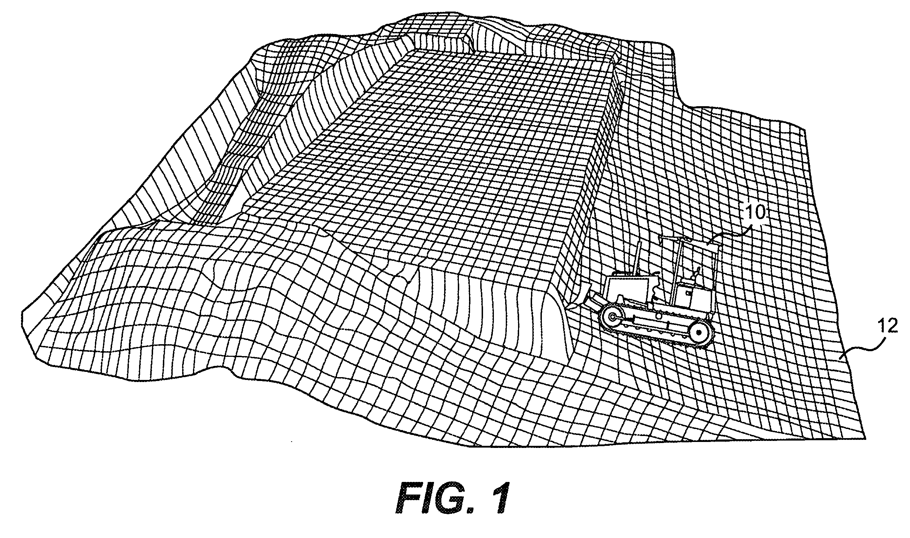

Fig. 1 illustrates an exemplary machine 10 performing dozing operations at a worksite 12. Machine 10 may be any type of earth moving machine known in the art, such as the bulldozer depicted in Fig. 1, in which the function of machine 10 includes the manipulation of material of worksite 12 to an architecturally desired form.

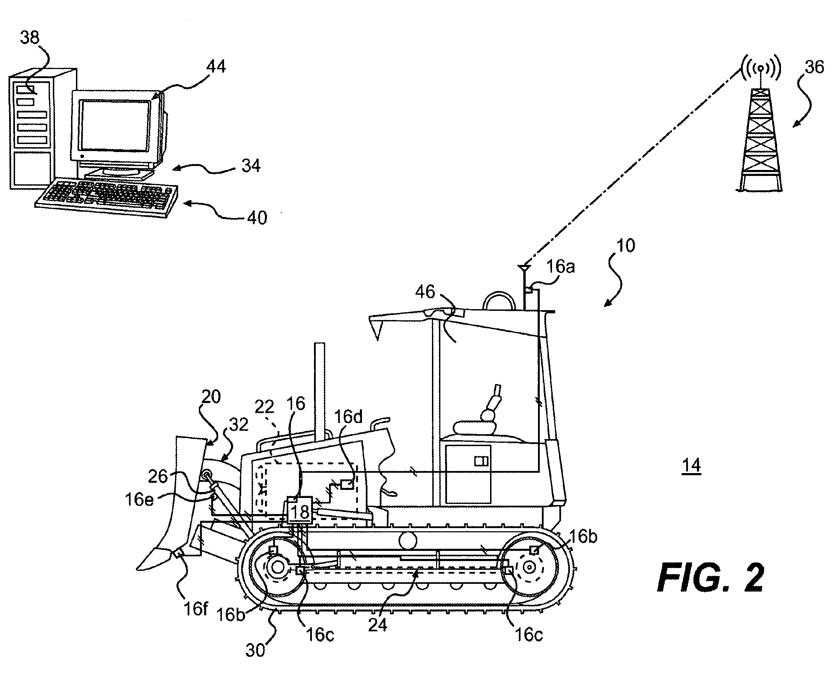

As illustrated in Fig. 2, machine 10 may be associated with a simulation system 14 having multiple components that interact to monitor the operation of machine 10 and perform analysis in response thereto. In particular, machine 10 may include a data module 16 in communication with a controller 18. It is contemplated that data module 16 and controller 18 may be integrated in a single unit, if desired. It is further contemplated that simulation system 14 may include additional or different components than those illustrated in Fig. 2.

Data module 16 may include a plurality of sensing devices 16a-f distributed throughout machine 10 to gather real-time data from various components and systems of machine 10. Sensing devices 16a-f may be associated with, for example, a tool 20 (such as a bulldozer blade), a power source 22, a transmission device 24, one or more actuator devices 26, driven and/or steerable traction devices 30, a torque converter (not shown), a fluid supply (not shown), operator input devices (not shown), and/or other systems and components of machine 10. These sensing devices 16a-f may automatically gather real-time data from machine 10, such as manipulation of tool 20, operation of power source 22, and/or machine travel characteristics (e.g., speed, torque, track slip rate, etc.); orientation and position of machine 10; fluid pressures, flow rates, temperatures, contamination levels, and/or viscosities; electric current and/or voltage levels; fluid (i.e., fuel, oil, water, etc.) consumption rates; loading levels (e.g., payload value, percent of maximum allowable payload limit, payload history, payload distribution, etc.); transmission output ratio; cycle time; idle time, grade; recently performed maintenance and/or repair operations; and other such pieces of information. Additional information may be generated or maintained by machine data module 16 such as the date, time of day, and operator information. The gathered data may be indexed relative to the time, date, operator, or other pieces of information, and communicated to controller 18.

A first sensing device 16a may be, for example, associated with conventional pitch and role inclination electronics disposed on machine 10. The electronics may include, for example, electrodes disposed within a glass vial and submerged in an electrically conductive fluid, such that as machine inclination changes, submersion depths of the electrodes also change, and electrical resistances of paths between electrodes may change accordingly. As such, the pitch and roll of machine 10 may be defined in terms of the measured resistances. It is to be appreciated that other pitch and roll and/or inclination sensors known in the art may be used alternatively or additionally. Alternatively, sensing device 16a may measure the ground speed of machine 10.

A second sensing device 16b, for example, may be associated with traction devices 30 to gather real-time speed and/or velocity data thereof. For example, sensing device 16b may be able to determine a real-time rotational speed of traction devices 30. It is to be appreciated that a track slip rate of traction devices 30 (i.e., a rate at which traction devices 30 are spinning in place) may be indicated by a detected difference between machine ground speed, as discussed above, and traction device speed. Alternatively, track slip rate may be indicated by a sudden increase in the speed of one or more of traction devices 30 detected by sensing device 16b.

In another aspect, sensing device 16b may gather real-time steering command information. For example, in a case where traction devices 30 comprise driven, non-steerable belts, or tracks, a measured difference between rotational speeds thereof may indicate a corresponding turning rate and direction negotiated by machine 10. In another example, wherein traction devices 30 comprise steerable wheels, or the like, sensing device 16b may simply measure a current steering angle thereof.

A third sensing device 16c, for example, may be associated with transmission device 24 to gather real-time data concerning a present transmission output (e.g., gear) utilized by machine 10. Additionally, sensing device 16c may gather real-time data concerning a torque output of transmission device 24. A fourth sensing device 16d may be associated with power source 22 in order to gather information regarding a speed output (RPM) and/or a torque output thereof.

A fifth sensing device 16e may be associated with actuator devices 26 to gather real-time data related to positioning of a tool frame 32 and/or tool 20. For example, actuator devices 26 may comprise hydraulic cylinders extendable throughout a range between a minimum length and a maximum length. In conjunction with known kinematics and geometry of tool frame 32 and/or tool 20, a three-dimensional position and orientation thereof, in site coordinates, may be determined based on sensed extension lengths of actuator devices 26.

A sixth sensing device 16f, for example, may be associated with tool 20 to gather real-time data concerning a load applied thereto. The load may be represented as a force, weight, volume, and/or mass of material engaged or supported by tool 20. Additionally, the load may be determined as a percentage of a maximum capacity load (i.e., a full load) that may be engaged or supported by tool 20. The maximum capacity load may be based on known specifications of tool frame 32, tool 20, and/or other components of machine 10. For example, device 16f may include a scale mechanism that may directly determine a force, weight, volume, and/or mass of the material supported. Alternatively, device 16f may comprise one or more optical sensors disposed about a surface of tool 20 to sense a capacity to which material is engaged against tool 20. Based on known specifications, a volume of material engaged by tool 20 may be determined. In another aspect, sensing device 16f may measure a force exerted by actuator devices 26 to maintain tool 20 in a desired position. As such, the measured force, in conjunction with known torque relationships between tool frame 32 and tool 20, and other specifications of machine 10, may allow determination of the force, weight, mass, volume, and/or percent capacity of the load. It is to be appreciated that other methods of load sensing known in the art may be used alternatively or additionally.

Controller 18 may be in communication with data module 16 and include any means for monitoring, recording, storing, indexing, processing, and/or communicating the real-time data concerning operational aspects of machine 10 described above. These means may include components such as, for example, a memory, one or more data storage devices, a central processing unit, or any other components that may be used to run a computer application. Furthermore, although aspects of the present disclosure may be described generally as being stored in memory, one skilled in the art will appreciate that these aspects may be stored on or read from different types of computer program products or computer-readable media such as computer chips and secondary storage devices, including hard disks, floppy disks, flash drives, optical media, CD-ROM, or other forms of RAM or ROM.

Controller 18 may further include a means for communicating with an offboard, remotely-located user interface 34. For example, controller 18 may include hardware and/or software that enables transmitting and receiving of the data through a direct data link (not shown) or a wireless communication link (not shown). The wireless communications may include satellite, cellular, infrared, radio, microwave, or any other type of wireless electromagnetic communications that enable controller 18 to exchange information. It is contemplated that a separate module may alternatively be included within simulation system 14 to facilitate the communication of data between controller 18 and user interface 34, if desired. In one aspect, controller 18 may communicate the data to a base station 36 equipped to relay the communications to user interface 34. Other simulation-capable machines associated with worksite 12 may also similarly communicate data to base station 36. Subsequently, the data may be communicated to an intermediary, such as a server (not show), which may appropriately package and transmit the received data to user interface 34 for simulation.

User interface 34 may represent one or more receiving, computing, and/or display systems of a business entity associated with machine 10, such as a manufacturer, dealer, retailer, owner, service provider, client, or any other entity that generates, maintains, sends, and/or receives information associated with machine 10. The one or more computing systems may embody, for example, a machine simulator, a mainframe, a work station, a laptop, a personal digital assistant, and other computing systems known in the art. Interface 34 may include components such as, for example, a memory, one or more data storage devices, a processor 38 (e.g. central processing unit, CPU), or any other components that may be used to run an application or a mathematical algorithm. In one aspect, interface 34 may include a firewall and/or require user authentication, such as a username and password, in order to prevent access thereto by unauthorized entities.

User interface 34 may be used for remotely initiating operator command signals that control operation of machine 10 at worksite 12 (referring to Fig. 1). The command signals may be communicated from user interface 34 to controller 18. For example, interface 34 may include a machine control application to receive the operator command signals and appropriately package them for transmission to controller 18. As such, controller 18 may generate machine command signals to control the various operational aspects of machine 10 in response to the received operator command signals. For example, controller 18 may vary electrical signals, hydraulic pressure, fluid flow rates, fluid consumption levels, etc., in order to change engine speed, ground speed, transmission output ratio, steering angle, tool and/or tool frame positioning in accordance with the received operator commands.

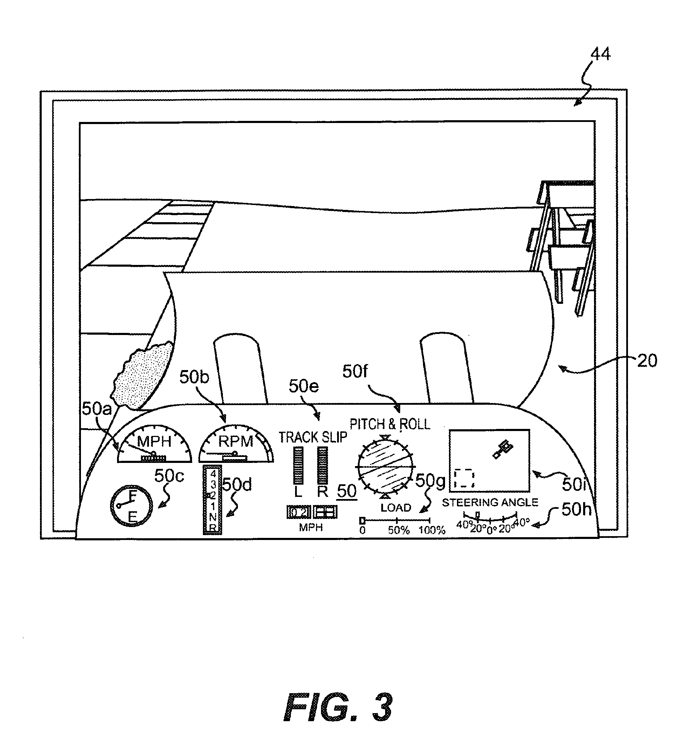

User interface 34 may further include an input device 40, a monitor 44, and an information panel 50 (shown in Fig. 3). In one aspect, input device 40 may resemble the operator interface included on machine 10. For example, input device 40 may include an arrangement of joysticks, wheels, levers, pedals, switches, and/or buttons similar (or identical) to that of machine 10. As such, operator manipulation of input device 40 may have a similar effect on machine 10 as corresponding manipulation of the operator interface within machine 10. Alternatively, input device 40 may be generic, and used for remote control of many different types of simulation-capable machines 10. However, it is to be appreciated that device 40 may simply embody one or more conventional computer interface devices, such as, for example, a keyboard, touchpad, mouse, or any other interface devices known in the art.

Monitor 44 may include a liquid crystal display (LCD), a CRT, a PDA, a plasma display, a touch-screen, a portable hand-held device, or any such display device known in the art. In one aspect, monitor 44 may comprise a full 360-degree display encompassing the operator for augmented, realistic display of the simulated worksite 12.

As shown in Fig. 3, information panel 50 may include a plurality of indicators 50a-i associated with respective parameter values derived from the received real-time information. For example, panel 50 may include a machine ground speed indicator 50a to show the present ground speed (mph or km/h) of machine 10, an engine speed indicator 50b to show the present engine rotational speed (RPM), a fuel level indicator 50c, and/or a transmission output ratio (gear) indicator 50d. Further, panel 50 may include a slip indicator 50e to identify a rate at which traction devices 30 may be slipping. For example, slip indicator 50e may show that the left track is slipping at a rate of 0.2 mph. Panel 50 may also include a machine roll and pitch indicator 50f to provide the operator with present inclination angles of machine with respect to horizontal ground (e.g., 20-degree pitch and 12-degree roll). Additionally, panel 50 may include a loading indicator 50g to show a capacity to which tool 20 is engaged, and/or a steering command indicator 50h to show a present steering angle of traction devices 30 (e.g., 22-degrees left). Panel 50 may include other indicators, such as, for example, a machine positioning indicator 50i showing a vertical overhead view of the position of machine 10 relative to worksite 12 (e.g., machine 10 icon positioned on a map of worksite 12). Alternatively or additionally, machine position indicator 50i may indicate present latitude and longitude, and/or other coordinates representing a current position of machine 10 with respect to worksite 12. It is to be appreciated that any other parameter values of interest may be selectively provided in panel 50 based on the received real-time data in order to provide an augmented reality for the machine operator.

Processor 38 (referring to Fig. 2) may be capable of performing algorithmic calculations through pre-programmed applications and/or algorithms. Processor 38 may use some or all of the real-time data collected by sensing devices 16a-f as input for these algorithms. Using the provided input collected by sensing devices 16a-f and the pre-programmed algorithms, processor 38 may perform the calculations described below to determine and quantify a blade load on tool 20.

Processor 38 may perform a first algorithmic calculation to determine values corresponding to a "forward ground power" of machine 10. This algorithm may be a function of five input variables provided by sensing devices 16a-f. A first variable may be the engine speed output (RPM) associated with power source 22, which may be provided by sensing device 16d. A second variable may be the torque output of transmission device 24, which may be provided by sensing device 16c. A third variable may be the transmission output (e.g., gear) utilized by machine 10, which may also be provided by sensing device 16c. A fourth variable may be the pitch and roll of machine 10, which may be provided by sensing device 16a. A fifth variable may be the ground speed of machine 10, which may also be provided by sensing device 16a.

Processor 38 may perform a second algorithmic calculation to determine values corresponding to an "estimation of blade load power" for tool 20. This algorithm may be a function of three input variables. A first variable may be "forward ground power" as calculated in the first algorithm above. A second variable, which may be provided by sensing device 16f, may be a blade load represented as a force, weight, volume, and/or mass of material engaged or supported by tool 20. A third variable, which may also be provided by sensing device 16f, may be a measurement of the force exerted by actuator devices 26 to maintain tool 20 in a desired position. The second algorithm may also be based on known torque relationships between tool frame 32 and tool 20.

Processor 38 may perform a third and final algorithmic calculation to determine values corresponding to a blade load on tool 20, based on a percentage scale (0-100%). This algorithm may be a function of three input variables. A first variable may be the "estimation of blade load power," as calculated in the second algorithm above. A second variable, which may be provided by sensing device 16b, may be a real-time steering command input. A third variable, which may also be provided by sensing device 16b, may be a measured difference between rotational speeds of traction devices 30 and the corresponding turning rate and direction negotiated by machine 10 (i.e. slip).

Processor 38 may use the blade load values computed by the third algorithm above to construct a computer model of tool 20 and of the material-exerting forces against tool 20. Processor 38 may display this computer model as an isometric (i.e. two dimensional) virtual image of tool 20 under load on monitor 44. Since the virtual model may be based on real-time data, processor 38 may continually perform calculations (based on updated input provided by sensing devices 16a-f) to update the computer image to reflect the real-time conditions on machine 10 and tool 20. Therefore, the virtual image displayed on monitor 44 may simulate the actual view of tool 20 from an operator station 46 of machine 10, with the view continuously updated to match real-time conditions.

### Industrial Applicability

The disclosed simulation system may remotely display blade loading information for a machine when large bandwidth for transmitting a live video feed may be unavailable. In particular, the disclosed simulation system may provide an augmented display of blade load (i.e. a two or three dimensional view of material being moved by tool 20) based on real-time data measurements so that an operator may comfortably and effectively control the machine. The operation of machine 10 will now be described.

An operator may log into user interface 34 by entering a username and password, and initiate the remote machine control application of machine 10. Once machine 10 has been properly accessed, the operator may give input to processor 38 through input device 40 to start ignition of machine 10. User interface 34 may wirelessly transmit the input to controller 18 to start the operation of machine 10. Either before or after the ignition of machine 10, sensing devices 16a-f may operate to provide sensed data to controller 18. Controller 18 may wirelessly transmit the sensed data to processor 38.

Controller 18 may wirelessly transmit the engine speed output (RPM) that may be provided by sensing device 16d, the torque output of transmission device 24 that may be provided by sensing device 16c, the transmission output (e.g., gear) that may be provided by sensing device 16c, the pitch and roll of machine 10 that may be provided by sensing device 16a, and the ground speed of machine 10 that may be provided by sensing device 16a. Processor 38 may input this data into the first algorithm to calculate the "forward ground power" of machine 10.

Controller 18 may wirelessly transmit a blade load (represented as a force, weight, volume, and/or mass of material engaged or supported by tool 20) and a measurement of the force exerted by actuator devices 26 (to maintain tool 20 in a desired position), where both inputs may be provided by sensing device 16f. Processor 38 may input this data, along with the "forward ground power" calculated in the first algorithm, into the second algorithm to calculate the "estimation of blade load power" for tool 20.

Controller 18 may wirelessly transmit the real-time steering command information and the slip, where both inputs may be provided by sensing device 16b. Processor 38 may input this data, along with the "estimation of blade load power" for tool 20, to calculate blade load based on a percentage scale (0-100%), on tool 20. Processor 38 may use the blade load values computed by the third algorithm above to construct a computer model of tool 20 and the material-exerting forces against tool 20 on monitor 44. Processor 38 may continually perform calculations (based on updated input provided by sensing devices 16a-f) to update the computer image to reflect the real-time conditions on machine 10 and tool 20.

Because processor 38 may remotely display blade loading in response to received real-time data associated with machine 10, remote control of tool 20 of machine 10 may be facilitated without the use of live video feed. Avoiding the use of a live video feed may eliminate a requirement for large bandwidth. In particular, the real-time blade load data may be communicated to user interface 34 by way of radio signals or other low-bandwidth carriers, where it may be used by processor 38 to render a simulated blade load. Therefore, even in the absence of a large bandwidth connection, the experience and skill of a remotely-located operator may be utilized in controlling tool 20.

It will be apparent to those skilled in the art that various modifications and variations can be made to the method and system of the present disclosure. Other embodiments of the method and system will be apparent to those skilled in the art from consideration of the specification and practice of the method and system disclosed herein. It is intended that the specification and examples be considered as exemplary only, with a true scope of the disclosure being indicated by the following claims and their equivalents.

## Claims

1. A tool simulation system (14) for a machine (10), comprising:
a user interface (34) located remotely from the machine (10); and
a processor (38) in communication with the user interface (34) and the machine (10), the processor (38) being configured to:
receive a plurality of parameters sensed at the machine's location;
calculate tool loading based on the plurality of parameters; and
display a computer model of the tool (20) and of the material exerting forces against the tool (20) on the user interface (34).

2. The tool simulation system (14) of claim 1, wherein the processor (38) calculates a load applied to the tool (29) using a first, a second, and a third algorithm.

3. The tool simulation system (14) of claim 2, wherein the plurality of parameters used by the first algorithm includes at least one of a speed output of a power source (22) of the machine (10), a torque output of a transmission device (24) of the machine (10), a gear of the transmission device (24), a pitch of the machine (10), a roll of the machine (10), and a ground speed of the machine (10).

4. The tool simulation system (14) of claim 3, wherein the plurality of parameters used by the second algorithm includes the forward ground power and at least one of a blade load supported by the tool (20) and a force exerted by an actuator device (26) on the tool (20).

5. The tool simulation system (14) of claim 4, wherein the plurality of parameters used by the third algorithm includes tool load power and at least one of machine steering information and a slip value of traction device (30) of the machine (10).

6. A method of displaying tool loading, comprising:
receiving input parameters measured at a machine location;
calculating tool loading of the machine (10) based on the received input parameters; and
displaying a computer model of the tool (20) and of the material exerting forces against the tool (20) to a user remote from the machine location.

7. The method of claim 6, wherein calculating includes using a first, a second, and a third algorithm, and the input parameter used by the first algorithm include at least one of a speed output of a power source (22) of the machine (10), a torque output of a transmission deceive (24) of the machine (10) a gear of the transmission device (24), a pitch of the machine (10), a roll of the machine (10) and a ground speed of the machine (10).

8. The method of claim 7, wherein the input parameters used by the second algorithm include forward ground power and at least one of a blade load supported by the tool (20) and a force exerted by an actuator device (26) on the tool (20).

9. The method of claim 8, wherein the input parameters used by the third algorithm include tool load power and at least one of machine steering information and a slip valvue of traction device (30) of the machine (10).

10. A machine (10), comprising:
a power source (22);
a traction device (30) driven by the power source (22) to propel the machine (10);
a frame (32) connecting the power source (22) to the traction device (30);
a tool (20) attached to the frame (32) and moved by the power source (22);
an operator control station (46) located remotely from the machine (10) and including a user interface (34); and
the tool simulation system (14), as in any one of claims 1-5, in communication with the power source (22), the traction device (30), the tool (20) and the operator control station (46).

## Patentansprüche

1. Werkzeugsimulationssystem (14) für eine Maschine (10), mit:
einer sich entfernt von der Maschine (10) befindenden Bedienerschnittstelle (34); und
einem mit der Bedienerschnittstelle (34) und der Maschine (10) in Verbindung stehenden Prozessor (38), wobei der Prozessor (38) dazu ausgebildet ist:
eine Vielzahl von Parameter, die an einem Ort der Maschine erfasst werden, zu empfangen;
eine Werkzeugbelastung auf Grundlage der Vielzahl der Parameter zu berechnen; und
ein Computermodell des Werkzeugs (20) und des Kräfte auf das Werkzeug (20) ausübenden Materials auf der Bedienerschnittstelle (34) darzustellen.

2. Werkzeugsimulationssystem (14) nach Anspruch 1, wobei der Prozessor (38) eine auf das Werkzeug (29) aufgebrachte Last unter Verwendung eines ersten, eines zweiten und eines dritten Algorithmus berechnet.

3. Werkzeugsimulationssystem (14) nach Anspruch 2, wobei die Vielzahl der von dem ersten Algorithmus verwendeten Parameter mindestens eine Drehzahlausgabe einer Energiequelle (22) der Maschine (10), eine Drehmomentausgabe eines Getriebes (24) der Maschine (10), einen Gang des Getriebes (24), eine Längsneigung der Maschine (10), eine Querneigung der Maschine (10) oder eine Bodengeschwindigkeit der Maschine (10) enthält.

4. Werkzeugsimulationssystem (14) nach Anspruch 3, wobei die Vielzahl der von dem zweiten Algorithmus verwendeten Parameter die Vorwärtsantriebsleistung und mindestens eine von dem Werkzeug (20) gestützte Schildlast oder eine durch eine Aktuatorvorrichtung (26) auf das Werkzeug (20) ausgeübte Kraft enthält.

5. Werkzeugsimulationssystem (14) nach Anspruch 4, wobei die Vielzahl der von dem dritten Algorithmus verwendeten Parameter eine Werkzeuglast und mindestens eine Maschinenlenkungsinformation oder einen Schlupfwert einer Antriebsvorrichtung (30) der Maschine (10) enthält.

6. Verfahren zum Anzeigen einer Werkzeugbelastung, mit:
Empfangen von Eingabeparameter, die an einem Ort der Maschinen gemessen wurden;
Berechnen der Werkzeugbelastung der Maschine (10) auf Grundlage der empfangenen Eingabeparametern; und
Anzeigen eines Computermodells des Werkzeugs (20) und des Kräfte auf das Werkzeug (20) ausübenden Materials an einen sich entfernt von dem Ort der Maschine befindenden Benutzer.

7. Verfahren nach Anspruch 6, wobei das Berechnen ein Verwenden eines ersten, eines zweiten und eines dritten Algorithmus umfasst und der von dem ersten Algorithmus verwendete Eingabeparameter mindestens eine Drehzahlausgabe einer Energiequelle (22) der Maschine (10), eine Drehmomentausgabe eines Getriebes (24) der Maschine (10), einen Gang des Getriebes (24), eine Längsneigung der Maschine (10), eine Querneigung der Maschine (10) oder eine Bodengeschwindigkeit der Maschine (10) umfasst.

8. Verfahren nach Anspruch 7, wobei die von dem zweiten Algorithmus verwendeten Eingabeparameter eine Vorwärtsantriebsleistung und mindestes eine von dem Werkzeug (20) gestützte Schildlast oder eine durch ein Aktuatorgerät (26) auf das Werkzeug (20) ausgeübte Kraft enthalten.

9. Verfahren nach Anspruch 8, wobei die von dem dritten Algorithmus verwendeten Eingabeparameter eine Werkzeuglast und mindestens eine Maschinenlenkungsinformation oder einen Schlupfwert der Antriebsvorrichtung (30) der Maschine (10) umfassen.

10. Maschine (10) mit:
einer Energiequelle (22);
einer Antriebsvorrichtung (30), die von der Energiequelle (22) zum Antreiben der Maschine (10) angetrieben wird;
einem Rahmen (32), der die Energiequelle (22) mit der Antriebsvorrichtung (30) verbindet;
einem Werkzeug (20), das an dem Rahmen (32) befestigt ist und von der Energiequelle (22) bewegt wird;
einer Bedienersteuerungsstation (46), die sich entfernt von der Maschine (10) befindet und eine Bedienerschnittstelle (34) enthält; und
dem Werkzeugssimulationssystem (14) nach einem der Ansprüche 1 bis 5, das in Verbindung mit der Energiequelle (22), der Antriebsvorrichtung (30), dem Werkzeug (20) und der Bedienersteuerungsstation (46) steht.

## Revendications

1. Système de simulation d'outil (14) pour une machine (10), comprenant :
une interface utilisateur (34) située à distance de la machine (10) ; et
un processeur (38) en communication avec l'interface utilisateur (34) et la machine (10), le processeur (38) étant configuré pour :
recevoir une pluralité de paramètres détectés à l'emplacement de la machine ;
calculer le chargement de l'outil sur la base de la pluralité de paramètres ; et
afficher un modèle informatique de l'outil (20) et du matériau exerçant des forces contre l'outil (20) à l'interface utilisateur (34).

2. Système de simulation d'outil (14) selon la revendication 1, dans lequel le processeur (38) calcule un chargement appliqué à l'outil (29) en utilisant un premier, un deuxième et un troisième algorithme.

3. Système de simulation d'outil (14) selon la revendication 2, dans lequel la pluralité de paramètres utilisés par le première algorithme comprennent au moins un élément choisi parmi une sortie de vitesse d'une source d'énergie (22) de la machine (10), une sortie de couple d'un dispositif de transmission (24) de la machine (10), une mise en prise du dispositif de transmission (24), un tangage de la machine (10), un roulis de la machine (10) et une vitesse au sol de la machine (10).

4. Système de simulation d'outil (14) selon la revendication 3, dans lequel la pluralité de paramètres utilisés par le deuxième algorithme comprend l'énergie au sol directe et au moins un élément choisi parmi un chargement sur la lame supportée par l'outil (20) et une force exercée par un dispositif d'actionnement (26) sur l'outil (20).

5. Système de simulation d'outil (14) de la revendication 4, dans lequel la pluralité de paramètres utilisés par le troisième algorithme comprennent une énergie de chargement de l'outil et au moins un élément choisi parmi les informations de pilotage de la machine et une valeur de patinage d'un dispositif de traction (30) de la machine (10).

6. Procédé d'affichage d'un chargement d'outil, comprenant les étapes consistant à :
recevoir des paramètres d'entrée mesurés dans un emplacement de la machine ;
calculer un chargement d'outil de la machine (10) sur la base des paramètres d'entrée reçus ; et
afficher un modèle informatique de l'outil (20) et du matériau exerçant des forces contre l'outil (20) pour un utilisateur distant de l'emplacement de la machine.

7. Procédé selon la revendication 6, dans lequel le calcul comprend l'utilisation d'un premier, d'un deuxième et d'un troisième algorithme et le paramètre d'entrée utilisé par le premier algorithme comprend au moins un élément choisi parmi une sortie de vitesse d'une source d'énergie (22) de la machine (10), une sortie de couple d'un dispositif de transmission (24) de la machine (10), une mise en prise du dispositif de transmission (24), un tangage de la machine (10), un roulis de la machine (10) et une vitesse au sol de la machine (10).

8. Procédé selon la revendication 7, dans lequel les paramètres d'entrée utilisés par le deuxième algorithme comprennent l'énergie au sol directe et au moins un élément choisi parmi un chargement sur la lame supportée par l'outil (20) et une force exercée par un dispositif d'actionnement (26) sur l'outil (20).

9. Procédé selon la revendication 8, dans lequel les paramètres d'entrée utilisés par le troisième algorithme comprennent l'énergie de chargement de l'outil et au moins un élément choisi parmi les informations de guidage de la machine et une valeur de patinage du dispositif de traction (30) de la machine (10).

10. Machine (10), comprenant :
une source d'énergie (22) ;
un dispositif de traction (30) entraîné par la source d'énergie (22) pour propulser la machine (10) ;
un châssis (32) raccordant la source d'énergie (22) au dispositif de traction (30) ;
un outil (20) fixé au châssis (32) et déplacé par la source d'énergie (22) ;
un poste de commande opérateur (46) situé à distance de la machine (10) et comprenant une interface utilisateur (34) ; et
le système de simulation d'outil (14), comme dans l'une quelconque des revendications 1 à 5, en communication avec la source d'énergie (22), le dispositif de traction (30), l'outil (20) et le poste de commande opérateur (46).
